(19) Europäisches Patentamt
European Patent Office
Office européen des brevets

(11) EP 2 442 161 A1

(12) **EUROPEAN PATENT APPLICATION**
published in accordance with Art. 153(4) EPC

(43) Date of publication:
**18.04.2012 Bulletin 2012/16**

(21) Application number: **10786214.6**

(22) Date of filing: **10.06.2010**

(51) Int Cl.:
***G02B 5/26*** *(2006.01)* ***B32B 7/02*** *(2006.01)*
***E06B 5/00*** *(2006.01)* ***G02B 5/30*** *(2006.01)*
***B60J 1/00*** *(2006.01)*

(86) International application number:
**PCT/JP2010/059830**

(87) International publication number:
**WO 2010/143683 (16.12.2010 Gazette 2010/50)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **11.06.2009 JP 2009140161**

(71) Applicant: **FUJIFILM Corporation**
**Tokyo 106-0031 (JP)**

(72) Inventors:
- **OKI Kazuhiro**
**Minami-ashigara-shi**
**Kanagawa 250-0193 (JP)**
- **ICHIHASHI Mitsuyoshi**
**Minami-ashigara-shi**
**Kanagawa 250-0193 (JP)**

(74) Representative: **HOFFMANN EITLE**
**Patent- und Rechtsanwälte**
**Arabellastraße 4**
**81925 München (DE)**

# (54) INFRARED REFLECTING PLATE AND INFRARED REFLECTIVE BONDED GLASS SHEET

(57) To provide an infrared-light reflective plate having the improved selective reflectivity characteristics.

Disclosed is an infrared-light reflective plate reflecting an infrared-light of equal to or longer than 700nm comprising a substrate of which fluctuation of retardation in plane at a wavelength of 1000nm, Re(1000), is equal to or more than 20nm, on a surface of the substrate, at least two light-reflective layers, X1 and X2, formed of a fixed cholesteric liquid crystal phase, and disposed in this order from the substrate, and, on another surface of the substrate, at least two light-reflective layers, Y1 and Y2, formed of a fixed cholesteric liquid crystal phase, and disposed in this order from the substrate, wherein the reflection center wavelengths of the light-reflective layers X1 and X2 are same with each other and are $\lambda_{X1}$ (nm), and the two layers reflect circularly-polarized light in opposite directions; the reflection center wavelengths of the light-reflective layers Y1 and Y2 are same with each other and are $\lambda_{Y1}$ (nm), and the two layers reflect circularly-polarized light in opposite directions; $\lambda_{X1}$ and $\lambda_{Y1}$ are not same; and refractive anisotropy of the light reflective layers X1 and X2, $\Delta n_{X1}$ and $\Delta n_{X2}$ satisfy the relation of $\Delta n_{X2} < \Delta n_{X1}$, and refractive anisotropy of the light reflective layers Y1 and Y2, $\Delta n_{Y1}$ and $\Delta n_{Y2}$ satisfy the relation of $\Delta n_{Y2} < \Delta n_{Y1}$.

FIG. 1

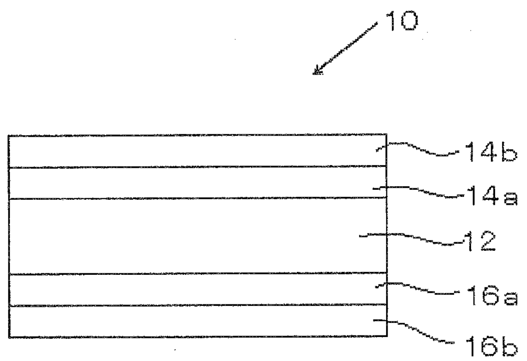




Printed by Jouve, 75001 PARIS (FR)

## Description

TECHNICAL FIELD

The present invention relates to an infrared-light reflective plate with plural light reflective layers formed of a fixed cholesteric liquid crystal phase, mainly for use for heat shield for windows of building structures, vehicles, etc. The present invention relates also to an infrared-light reflective laminated glass using it.

BACKGROUND ART

With the recent increase in interest in environment and energy-related issues, the needs for energy-saving industrial products are increasing; and as one of them, glass and film are desired that are effective for heat shield for windowpanes for houses, automobiles, etc., or that is, effective for reducing heat load due to sunlight. For reducing heat load due to sunlight, it is necessary to prevent transmission of sunlight rays falling within any of the visible range or the infrared range of the sunlight spectrum.

Laminated glass coated with a special metallic film capable of blocking out thermal radiations, which is referred to as Low-E pair glass, is often used as eco-glass having high heat-insulating/heat-shielding capability. The special metallic film may be formed by lamination of plural layers, for example, according to a vacuum-deposition method disclosed in Patent Reference 1. The special metallic film formed through vacuum deposition is extremely excellent in reflectivity, but the vacuum process is nonproductive and its production cost is high. In addition, when the metallic film is used, it also blocks electromagnetic waves; and therefore in use in mobile telephones and the like, the metallic film may causes radio disturbance; or when used in automobiles, there may occur a problem in that ETC (electronic toll collection) could not be used.

Patent Reference 2 proposes a heat-reflecting transparent substrate having a metallic fine particles-containing layer. The metallic fine particles-containing film is excellent in visible light transmittance but has a low reflectivity to light falling within a wavelength range of from 700 to 1200 nm that significantly participates in heat shielding, and therefore has a problem in that its heat-shielding capability could not be enhanced.

And Patent Reference 3 discloses a heat-shielding sheet that has an infrared-absorbing dye-containing layer. Use of an infrared-absorbing dye may lower sunlight transmittance but is problematic in that the film surface temperature rises through sunlight absorption and the heat-shielding capability of the film lowers through re-release of the heat.

And Patent Reference 4 discloses a laminated optical film having a retardation film with predetermined characteristics and a reflective circularly-polarizing plate and having infrared reflectivity, and this discloses an example of using a cholesteric liquid-crystal phase as the retardation film.

And Patent Reference 5 discloses an infrared-light reflecting article comprising a visible light transparent substrate and an infrared-light reflecting cholesteric liquid-crystal layer disposed on the substrate.

And Patent Reference 6 discloses a polarizing element having plural cholesteric liquid-crystal layers; however, the laminate formed through lamination of cholesteric liquid-crystal layers is used mainly for efficiently reflecting visible-range light.

In fact, it is difficult to completely reflect a light having a specific wavelength by using a light-reflective film having a light-reflective layer formed of fixed cholesteric liquid-crystal; and in general, a specific retarder, a λ/2 plate, is used. For example, in Patent References 4 and 5, a light-reflective layer formed of fixed cholesteric liquid-crystal phase is formed on both sides of a λ/2 plate and tried for reflection of a right circularly-polarized light and a left circularly-polarized light having a predetermined wavelength, in which the two light-reflective layers have the same optical helical-rotation direction and have the same helical pitch.

CITATION LIST

PATENT REFERENCES

[Patent Reference 1] JP-A-6-263486
[Patent Reference 2] JP-A-2002-131531 1
[Patent Reference 3] JP-A-6-194517
[Patent Reference 4] Japanese Patent 4109914
[Patent Reference 5] JP-T 2009-514022
[Patent Reference 6] Japanese Patent 3500127

## SUMMARY OF INVENTION

## PROBLEMS TO BE RESOLVED BY THE INVENTION

As described above, a λ/2 plate is a special retarder, and its production is difficult and its production cost is high. In addition, the material for the plate is limited to a special one, and the use of the plate may be thereby limited. Further, in general, a λ/2 plate could act as a λ/2 plate to the light coming in the plate surface in the normal direction thereto; however, strictly, it could not function as a λ/2 plate to the light coming therein in oblique directions. Accordingly, the constitution containing a combination of λ/2 plates involves a problem in that it could not completely reflect the light coming therein in oblique directions.

Accordingly, an object of the invention is to improve the reflectivity characteristic of an infrared-light reflective plate that has a plurality of light-reflective layers each formed of fixed cholesteric liquid-crystal, without indispensable use of a λ/2 plate therein. More specifically, an object of the invention is to provide an infrared-light reflective plate and an infrared-light reflective laminated glass excellent in the selective reflectivity characteristics for the light with broader wavelength, employing a combination of an inexpensive substrate of which retardation in-plane may fluctuate and a plurality of light-reflective layers each formed of fixed cholesteric liquid-crystal.

## MEANS OF SOLVING THE PROBLEMS

To achieve the above-mentioned object, the present inventors have assiduously studied and, as a result, have found that, when two adjacent light reflective layers, formed of a fixed cholesteric liquid-crystal phase having an opposite optical rotation to each other (that is, having a right optical rotation or a left optical rotation), were disposed on a substrate, the laminate could reflect any of the left circularly-polarized light and the right circularly-polarized light falling within a predetermined wavelength range without being influenced by the optical properties of the substrate. They have found also that it was possible to broaden the reflective characteristics by further disposing another pair of light reflective layers, exhibiting selective reflectivity characteristics to another wavelength range and formed of a fixed cholesteric liquid-crystal phase having an opposite optical rotation to each other (that is, having a right optical rotation or a left optical rotation). However, they have found also that, when two adjacent light reflective layers, formed of a fixed cholesteric liquid-crystal phase, were prepared by a simple coating method, it was difficult to control the orientation of the upper light reflective layer, which didn't always provide preferred characteristics. On the basis of these findings, they have assiduously studied and, as a result, have found that, when the refractive anisotropy $\Delta n$ of the upper and lower light reflective layers satisfied the predetermined condition, the above-mentioned problem could be solved and an infrared-light reflective plate, having desired characteristics, could be obtained. Then, the inventors have made the present invention.

The means for achieving the first object are as follows.

[1] An infrared-light reflective plate reflecting an infrared-light of equal to or longer than 700nm comprising

a substrate of which fluctuation of retardation in plane at a wavelength of 1000nm, Re(1000), is equal to or more than 20nm, on a surface of the substrate,
at least two light-reflective layers, X1 and X2, formed of a fixed cholesteric liquid crystal phase, and disposed in this order from the substrate, and, on another surface of the substrate,
at least two light-reflective layers, Y1 and Y2, formed of a fixed cholesteric liquid crystal phase, and disposed in this order from the substrate, wherein
the reflection center wavelengths of the light-reflective layers X1 and X2 are same with each other and are $\lambda_{X1}$ (nm), and the two layers reflect circularly-polarized light in opposite directions;
the reflection center wavelengths of the light-reflective layers Y1 and Y2 are same with each other and are $\lambda_{Y1}$ (nm), and the two layers reflect circularly-polarized light in opposite directions;
$\lambda_{X1}$ and $\lambda_{Y1}$ are not same; and
refractive anisotropy of the light reflective layers X1 and X2, $\Delta n_{X1}$ and $\Delta n_{X2}$ satisfy the relation of $\Delta n_{X2} < \Delta n_{X1}$, and refractive anisotropy of the light reflective layers Y1 and Y2, $\Delta n_{Y1}$ and $\Delta n_{Y2}$ satisfy the relation of $\Delta n_{Y2} < \Delta n_{Y1}$.

[2] The infrared-light reflective plate of [1], wherein

the fluctuation of Re(1000) of the substrate is equal to or more than 100nm.

[3] The infrared-light reflective plate of [1] or [2], wherein

the reflection center wavelength $\lambda_{X1}$ (nm) of the light-reflective layers X1 and X2 falls within a range of from 900 to 1050 nm, and
the reflection center wavelength $\lambda_{Y1}$ (nm) of the light-reflective layers Y1 and Y2 falls within a range of from 1050 to 1300 nm.

[4] The infrared-light reflective plate of any one of [1] to [3], wherein

each of the light reflective layers X2 and Y2 is a layer which is formed by fixing a cholesteric liquid crystal phase of a liquid crystal composition applied to a surface of the light reflective layers X1 and Y1 respectively.

[5] The infrared-light reflective plate of any one of [1] to [4], of which retardation in plane at a wavelength of 1000nm, Re(1000), is from 800 to 13000nm.
[6] The infrared-light reflective plate of any one of [1] to [5], comprising

two light-reflective layers, X3 and X4, formed of a fixed cholesteric liquid crystal phase, and disposed on the light reflective layer X2, and,
two light-reflective layers, Y3 and Y4, formed of a fixed cholesteric liquid crystal phase, and disposed on the light reflective layer Y2, wherein
the reflection center wavelengths of the light-reflective layers X3 and X4 are same with each other and are $\lambda_{X3}$ (nm), and the two layers reflect circularly-polarized light in opposite directions;
the reflection center wavelengths of the light-reflective layers Y3 and Y4 are same with each other and are $\lambda_{Y3}$ (nm), and the two layers reflect circularly-polarized light in opposite directions; and
$\lambda_{X3}$ and $\lambda_{Y4}$ are not same and are not same with either $\lambda_{X1}$ or $\lambda_{Y1}$.

[7] The infrared-light reflective plate of any one of [1] to [6], comprising an easy-adhesion layer as at least one outermost layer thereof.
[8] The infrared-light reflective plate of [7], wherein the easy-adhesion layer comprises polyvinyl butyral resin.
[9] The infrared-light reflective plate of [7] or [8], wherein the easy-adhesion layer comprises at least one ultraviolet absorber.
[10] A laminated glass comprising:

two glass plates, and, between them,
an infrared-light reflective plate of any one of [1] to [9].

## ADVANTAGE OF THE INVENTION

According to the invention, it is possible to improve the reflectivity characteristic of an infrared-light reflective plate that has a plurality of light-reflective layers each formed of fixed cholesteric liquid-crystal, without indispensable use of a λ/2 plate therein. More specifically, it is possible to provide an infrared-light reflective plate and an infrared-light reflective laminated glass excellent in the selective reflectivity characteristics for the light with broader wavelength, employing a combination of an inexpensive substrate of which retardation in-plane may fluctuate and a plurality of light-reflective layers each formed of fixed cholesteric liquid-crystal.

## BRIEF DESCRIPTION OF THE DRAWING

[FIG. 1] is a cross-sectional view of one example of the infrared-light reflective plate of the first invention.
[FIG. 2] is a cross-sectional view of another example of the infrared-light reflective plate of the first invention.

## MODE FOR CARRYING OUT THE INVENTION

The invention is described in detail hereinunder. In this description, the numerical range expressed by the wording "a number to another number" means the range that falls between the former number indicating the lowermost limit of the range and the latter number indicating the uppermost limit thereof.
And in this description, the refractivity anisotropy, Δn, of a layer formed of a fixed cholesteric liquid-crystal phase is defined as follows.
In this description, the refractivity anisotropy, Δn, of a layer formed of a fixed cholesteric liquid-crystal phase means the

value of $\Delta n$ for a light of a wavelength at which the layer exhibits the selective reflectivity characteristic (concretely, at a wavelength around 1000 nm). Concretely, first, as a sample, a layer of a fixed cholesteric liquid-crystal phase in which the helical axes of the liquid-crystal molecules are aligned uniformly to a layer plane is formed on a substrate (such as glass and film) subjected to an alignment treatment or having an alignment film thereon. The selective reflection of the layer is determined, and its peak width Hw is measured. Separately, the helical pitch p of the sample is measured. The helical pitch may be measured on the TEM picture of the cross section of the sample. The data are introduced into the following formula, and the refractivity anisotropy $\Delta n$ of the sample is thereby determined.

$$\Delta n = Hw/p$$

In this description, for the wording that "the reflection center wavelength of each layer is the same", needless-to-say, the error generally acceptable in the technical field to which the present invention belongs is naturally taken into consideration. In general, the difference of around $\pm 30$ nm or so will be acceptable for the same reflection center wavelength.

Hereinafter, embodiments of the invention will be described with reference to the drawings.

The infrared-light reflective plate shown in FIG. 1 has, on one surface of the substrate 12, light-reflective layers 14a and 14b each formed of a fixed cholesteric liquid-crystal phase, and has, on another surface of the substrate 12, light-reflective layers 16a and 16b each formed of a fixed cholesteric liquid-crystal phase. The substrate 12 is, for example, a polymer film, and its optical properties are not specifically defined. One feature of the invention resides in that a member of which in-plane retardation Re fluctuates is used as the substrate; and in this point, the invention is differentiated from existing techniques where a $\Delta/2$ plate is used as the substrate and where its optical properties are willingly utilized for improving the light-reflective characteristic of the reflector. However, the invention does not hinder the use of a retarder having an accurately-regulated retardation such as $\lambda/2$ plate or the like, as the substrate 12.

Concretely, not specifically defined in point of the optical properties thereof, the substrate 12 may be a retarder having retardation or may also be an optically-isotropic substrate. In other words, the substrate 12 is not required to be a retarder such as a $\lambda/2$ plate or the like of which the optical properties are strictly controlled. In the invention, the substrate 12 may be formed of a polymer film or the like of which the fluctuation of in-plane retardation at a wavelength of 1000 nm, Re(1000), is 20 nm or more. Furthermore, in the invention, the substrate 12 may be formed of a polymer film or the like of which the fluctuation of in-plane retardation at a wavelength of 1000 nm, Re(1000), is 100 nm or more. In-plane retardation of the substrate is not also specifically defined. For example, a retarder or the like of which in- plane retardation at a wavelength of 1000 nm, Re(1000), is from 800 to 13000 nm may be used. Examples of the polymer film usable for the substrate are described later.

The light-reflective layers 14a, 14b, 16a and 16b are layers each formed of a fixed cholesteric liquid-crystal phase, and therefore, they exhibit selective light reflectivity of reflecting a light having a specific wavelength based on the helical pitch of the cholesteric liquid-crystal phase in each layer. In this embodiment, the helical directions of the respective cholesteric liquid-crystal phases in the neighboring light-reflective layers 14a and 14b are opposite to each other, but the reflection center wavelength $\lambda_{14}$ of the two layers is the same. Similarly, the helical directions of the respective cholesteric liquid-crystal phases in the neighboring light-reflective layers 16a and 16b are opposite to each other, but the reflection center wavelength $\lambda_{16}$ of the two layers is the same. In this embodiment, $\lambda_{14} \neq \lambda_{16}$, and therefore, the light-reflective layers 14a and 14b selectively reflect the left circularly-polarized light and the right circularly-polarized light at a predetermined wavelength $\lambda_{14}$, and the light-reflective layers 16a and 16b selectively reflect the left circularly-polarized light and the right circularly-polarized light at a wavelength $\lambda_{16}$.

The infrared-light reflective plate 10, shown in FIG. 1, reflects the infrared-light with a wavelength of 700nm or longer; and therefore, both of the selective reflection center wavelength $\lambda_{14}$ of the light-reflective layers 14a and 14b and the selective reflection center wavelength $\lambda_{16}$ of the light-reflective layers 16a and 16b are preferably equal to or longer than 700nm. According to an example of the invention, the selective reflection center wavelength of one of $\lambda_{14}$ and $\lambda_{16}$ is from 900nm to 1050nm (preferably, from 800nm to 1000nm, or from 850nm to 950nm), and the selective reflection center wavelength of another thereof is from 1050nm to 1300nm (preferably, from 1000nm to 1200nm, or from 1050nm to 1150nm).

The helical pitch of the cholesteric liquid-crystal layer showing the above-mentioned reflection center wavelength is, in general, from 500 to 1350 nm or so (preferably from 500 to 900nm or so, or more preferably from 550 to 800nm or so). And the thickness of each of the light reflective layers is from 1 micro meter to 8 micro meters or so (preferably from 3 to 8 micro meters or so). However, the invention is not limited to the range. By selecting and controlling the type and the concentration of the material (mainly liquid-crystal material and chiral agent) for use in forming the layers, the light-reflective layer having a desired helical pitch can be formed. The thickness of the layer may be controlled to fall within the desired range, by controlling the coating amount.

As described above, in the neighboring light-reflective layers 14a and 14b, the helical directions of the respective cholesteric liquid-crystal phases are opposite to each other; and similarly, in the neighboring light-reflective layers 16a and 16b, the helical directions of the respective cholesteric liquid-crystal phases are opposite to each other. In that manner, arranging light-reflective layers adjacent to each other, in which the cholesteric liquid-crystal phases are aligned in the direction opposite to each other and of which the selective reflections center wavelength are the same, enables reflection of both left circularly-polarized light and right circularly-polarized light at the same wavelength. This effect has no relation with the optical properties of the substrate 12, and is obtained without any influence of the optical properties of the substrate 12.

On the other hand, forming two adjacent light reflective layers of the desired cholesteric liquid crystal phase has been considered difficult. For example, the method comprising forming each of the layers of the desired cholesteric liquid crystal phase on a temporary substrate independently, and then laminating them to bond to each other is known; and the method comprising preparing a liquid crystal composition by mixing materials capable of forming a cholesteric liquid crystal phase suitable to each of the light reflective layers, applying the liquid crystal composition to a surface of a support to form a coated layer, and then allowing the coated layer to form a phase separation during drying and thermal alignment, to form two cholesteric liquid crystal layer is known. However, according to the former method employing a lamination, there is a problem that the cost may increase; and according to the latter method, there is a problem that the thickness may become thicker as a whole, that the orientation state may worsen, or that the orientation state may also worsen due to the fluctuation at the interface of the phase separation. Any expensive step such as a lamination step or any step beyond control such as a phase-separation step may be unnecessary if the laminated structure can be obtained by repeating the steps of coating, which is preferable. However, according to the method comprising a plurality of repetition of a coating step, a drying step and a fixing step to create a laminated structure of the light reflective layers formed of a cholesteric liquid crystal phase, it was difficult to control the orientation during forming any upper layer. The present inventors have assiduously studied and, as a result, have found that if refractive anisotropy of the lower light-reflective layer was larger than that of the upper light-reflective layer adjacent to the lower layer, the orientation state of the upper light-reflective layer became good.

Namely, in FIG. 1, refractive anisotropy lection $\Delta n_{14a}$ and $\Delta n_{14b}$ of the light-reflective layers 14a and 14b satisfy $\Delta n_{14b} < \Delta n_{14a}$; and refractive anisotropy lection $\Delta n_{16a}$ and $\Delta n_{16b}$ of the light-reflective layers 16a and 16b satisfy $\Delta n_{16b} < \Delta n_{16a}$. If the relations are satisfied, the light reflective layers 14b and 16b having the desired light reflective characteristics and having the good orientation state can be prepared even by applying the liquid crystal compositions to the surface of the light reflective layers 14a and 16a respectively to form a cholesteric liquid crystal phase, and then fixing the cholesteric liquid crystal phase. The details about the relation between the refractive anisotropy satisfying the above-described condition and this effect are not known, however, one presumption would be as follows. The value of $\Delta n$ of a light reflective layer formed of a fixed cholesteric liquid crystal layer may be varied depending on any condition in the polymerization for fixing the cholesteric liquid crystal phase or on the formulation of the liquid crystal composition to be used for the layer, and usually, it may be close to the value of $\Delta n$ of the rod-like liquid crystal which is contained in the liquid crystal composition at a highest ratio. Therefore, the light reflective layer formed by using any liquid crystal composition containing a rod-like liquid crystal having a higher $\Delta n$ as a main ingredient may naturally have higher $\Delta n$. On the other hand, if the concentration of a chiral agent to be added to the liquid crystal composition is increased for obtaining the desired helical pitch, the ratio of the rod-like liquid crystal compound is decreased relatively. Accordingly, the lower light reflective layer formed by using any liquid crystal composition, containing a rod-like liquid crystal, originally having a higher $\Delta n$, and a chiral agent in a smaller amount, may have a higher $\Delta n$. The rod-like liquid crystal having a high $\Delta n$ may form a desired cholesteric liquid crystal phase state without being added with any additive such as a chiral agent, and therefore, the lower layer may be formed without any disorder at the interface or any disorder in the orientation caused by the presence of any additive. Therefore, it may be possible to apply the liquid crystal composition for the upper layer to the surface of the lower layer having a good orientation state without any orientation disorder, and also to form the cholesteric liquid crystal phase more stably. The above-mentioned effect may be considered to be obtained since the upper light reflective layer, having the desired characteristics, can be formed in this way.

As an example, it is provided an example wherein the light reflective layer 14a is formed of a liquid crystal composition containing a right-rotation chiral agent, or that is, the light reflective layer 14a reflects a right circularly-polarized light, and, as well as the light reflective layer 14a, the light reflective layer 16a is formed of a liquid crystal composition containing a right-rotation chiral agent, or that is, the light reflective layer 16a reflects a right circularly-polarized light; and the light reflective layer 14b is formed of a liquid crystal composition containing a left-rotation chiral agent, or that is, the light reflective layer 14b reflects a left circularly-polarized light, and, as well as the light reflective layer 14b, the light reflective layer 16b is formed of a liquid crystal composition containing a left-rotation chiral agent, or that is, the light reflective layer 16b reflects a left circularly-polarized light. There are many commercially available right-rotation chiral agents having a higher twisting power, compared with the commercially available left-rotation chiral agents. If any chiral agent having a higher twisting power is used, an amount thereof may be reduced, and therefore, according to the above-described example, the light reflective layers satisfy the conditions of $\Delta n_{14b} < \Delta n_{14a}$ and $\Delta n_{16b} < \Delta n_{16a}$

can be prepared respectively by using the material selected from a wide variety of materials.

FIG. 2 shows a cross-sectional view of another embodiment of the infrared-light reflective plate of the invention. As well as the infrared-light reflective plate 10 shown in FIG. 1, the infrared-light reflective plate 10' shown in FIG. 2 has light-reflective layers 14a and 14b on one surface of the substrate 12, and has light-reflective layers 16a and 16b on another surface of the substrate 12. The characteristics of the layers and the relations thereof are same as those in FIG. 1. The infrared-light reflective plate 10' has also light-reflective layers 18a and 18b on the surface of the light-reflective layer 14b, and has also light-reflective layers 20a and 20b on the surface of the light-reflective layer 16b. As well as the light reflective layers 14a and 14b or the light reflective layers 16a and 16b, the light reflective layers 18a and 18b or the light reflective layers 20a and 20b have the feature wherein the helical directions of the respective cholesteric liquid-crystal phases in the light-reflective layers 18a and 18b or the light reflective layers 20a and 20b are opposite to each other, but the reflection center wavelengths of the two layers are same with each other. However, the reflection center wavelength $\lambda_{18}$ of the light reflective layers 18a and 18b and the reflection center wavelength $\lambda_{20}$ of the light reflective layers 20a and 20b are different from each other, and they are not same as both of the reflection center wavelengths $\lambda_{14}$ and $\lambda_{16}$ of the light reflective layers 14a and 14b and the light reflective layers 16a and 16b. Therefore, as well as the infrared-light reflective plate 10, the infrared-light reflective plate 10' has not only the selective reflection characteristics for the right and left circularly-polarized lights with the center reflection wavelengths of $\lambda_{14}$ and $\lambda_{16}$ attributed to the light reflective layers 14a and 14b and the light reflective layers 16a and 16b respectively but also the selective reflection characteristics for the right and left circularly-polarized lights with the center reflection wavelengths $\lambda_{18}$ and $\lambda_{20}$ attributed to the light reflective layers 18a and 18b and the light reflective layers 20a and 20b respectively; and the selective reflection characteristics thereof are more broadened.

According to one example of the invention, the center selection wavelength of any one of $\lambda_{14}$, $\lambda_{16}$, $\lambda_{18}$ and $\lambda_{20}$ is from 800 to 1000nm (or more preferably from 850 to 950nm), other one of them is from 900 to 1100nm (or more preferably from 950 to 1050), other one of them is from 1000 to 1200nm (or more preferably from 1050 to 1150nm); and other one of them is from 1100 to 1300nm (or more preferably from 1150 to 1250nm). However, the invention is not limited to this example.

When comparing the pair of the light reflective layers 14a and 14b with the pair of the light reflective layers 18a and 18b formed on the same surface, preferably, the center reflection wavelength of the pair of the light reflective layers closer to the substrate, in other words, the center reflection wavelength $\lambda_{14}$ of the pair of the light reflective layers 14a and 14b is shorter than the center reflection wavelength $\lambda_{18}$ of the pair of the light reflective layers 18a and 18b; and similarly, when comparing the pair of the light reflective layers 16a and 16b with the pair of the light reflective layers 20a and 20b formed on the same surface, preferably, the center reflection wavelength of the pair of the light reflective layers closer to the substrate, in other words, the center reflection wavelength $\lambda_{16}$ of the pair of the light reflective layers 16a and 16b is shorter than the center reflection wavelength $\lambda_{20}$ of the pair of the light reflective layers 20a and 20b. Obtaining the stable orientation state becomes more difficult during forming the upper layer, which results in more difficulty in obtaining the desired selective reflection characteristics. If the light reflective layers having the reflection characteristics for the shorter light with a higher energy (with a higher effect of elevating the temperature) are disposed closer to the substrate, the effect as the heat-shielding member may be maintained better since the reflection characteristics for the shorter light are improved. Namely, it is preferable that any of $\lambda_{14}$, $\lambda_{16}$, $\lambda_{18}$ and $\lambda_{20}$ is different from each other, and that they satisfy the relations of $\lambda_{14}<\lambda_{18}$ and $\lambda_{16}<\lambda_{20}$

The light reflective layers 18a, 18b, 20a and 20b may be prepared according to any method. As described above, one example of the simpler method is as follows. A liquid crystal composition is applied to a surface of a lower layer to form a cholesteric liquid crystal phase, and then the orientation state is fixed to form a light reflective layer. According to this method, the surface texture or the orientation state of the lower layer affects the orientation state of the upper layer formed on the lower layer, and therefore, the refractive anisotropy $\Delta n_{18a}$ of the light reflective layer 18a and the refractive anisotropy $\Delta n_{18b}$ of the light reflective layer 18b preferably satisfy the relation of $\Delta n_{18b} < \Delta n_{18a}$; and that the refractive anisotropy $\Delta n_{20a}$ of the light reflective layer 20a and the refractive anisotropy $\Delta n_{20b}$ of the light reflective layer 20b preferably satisfy the relation of $\Delta n_{20b} < \Delta n_{20a}$.

The embodiment of the infrared-light reflective plate of the invention is not limited to those of FIG. 1 and FIG. 2. In other embodiments, three (six in total), four (eight in total) or more pairs of the light-reflective layers may be laminated on one surface of the substrate. And the numbers of the light reflective layers on one surface and another surface of the substrate may be same or different from each other. And still another embodiment may have two or more pairs of light-reflective layers each having the same reflection center wavelength.

Needless-to-say, the infrared-light reflective plate of the invention may be combined with any other infrared-light reflective plate for the purpose of further broadening the reflection wavelength range. In addition, the reflector may have a light-reflective layer capable of reflecting a light having a predetermined wavelength on the basis of any other principle than the selective reflectivity characteristic of cholesteric liquid-crystal phase. Regarding the members capable of being combined with the reflector of the invention, there may be mentioned composite films and the layers constituting the films described in JP-T 4-504555, as well as multilayer laminates described in JP-T 2008-545556, etc.

The infrared-light reflective plate of the present invention may have an easy-adhesion layer as an outermost layer thereof for easily adhering to another member. For example, the easy-adhesion layer containing polyvinyl butyral resin may have a high adhesive ability for an interlayer of a laminated glass, and therefore, the infrared-light reflective plate having such an easy-adhesion layer may be incorporated in a laminated glass easily. Since the easy-adhesion layer has a high adhesive ability for the interlayer, the laminated glass may be excellent in light-resistance and any degradation such as generated air bubbles may be hardly found therein even if being subjected to an irradiation of natural light for a long time, which is preferable. If an ultraviolet absorber is added to the easy-adhesion layer, the light-resistance may be more improved, and it may be possible also to prevent any yellowish coloration caused after being subjected to an irradiation of natural light for a long time, which is preferable.
Next, examples of the material and the method for preparing the infrared-light reflective plate of the invention are described in detail.

1. Materials for Light-Reflective Layers

According to the invention, for preparing each of the light-reflective layers, a curable liquid crystal composition is preferably used. One example of the liquid crystal composition contains at least a rod-like liquid crystal, an optically-active compound (chiral agent) and a polymerization initiator. Two or more types of each of the ingredients may be used. For example, polymerizable and non-polymerizable liquid-crystal compounds may be used in combination. Or, low-molecular weight or high-molecular weight liquid-crystal compounds may be used in combination. Furthermore, each of the light-reflective layers may contain at least one additive selected from any additives such as homogenous-alignment promoter, anti-unevenness agent, anti-repelling agent and polymerizable monomer for improving the uniformity of alignment, the coating property or the film strength. If necessary, the liquid crystal composition may contain any polymerization inhibitor, antioxidant, ultraviolet absorber, light-stabilization agent or the like in an amount unless the optical properties thereof are lowered.

(1) Rod-like Liquid Crystal Compound

Examples of the rod-like liquid crystal compound which can be used in the invention include nematic rod-like liquid crystal compounds. Preferable examples of the nematic rod-like liquid crystal include azomethines, azoxys, cyanobiphenyls, cyanophenyl esters, benzoic acid esters, cyclohexanecarboxylic acid phenyl esters, cyanophenylcyclohexanes, cyano-substituted phenylpyrimidines, alkoxy-substituted phenylpyrimidines, phenyl dioxanes, tolans and alkenylcyclohexyl benzonitriles. In the invention, the liquid crystal compound can be selected from not only low-molecular weight compounds but also high-molecular weight compounds.
The rod-like liquid crystal compound to be used in the invention may be polymerizable or not polymerizable. Examples of the rod-like liquid crystal having no polymerizable group are described in many documents such as Y. Goto et.al., Mol.Cryst. Liq. Cryst. 1995, Vol. 260, pp.23-28.
A polymerizable rod-like liquid crystal compound may be prepared by introducing a polymerizable group in rod-liquid crystal compound. Examples of the polymerizable group include an unsaturated polymerizable group, epoxy group, and aziridinyl group; and an unsaturated polymerizable group is preferable; and an ethylene unsaturated polymerizable group is especially preferable. The polymerizable group may be introduced in a rod-like liquid crystal compound according to any method. The number of the polymerizable group in the polymerizable rod-like liquid crystal compound is preferably from 1 to 6 and more preferably from 1 to 3. Examples of the polymerizable rod-like liquid crystal compound include those described in Makromol.Chem., vol. 190, p.2255 (1989), Advanced Materials, vol. 5, p.107 (1993), US Patent No. 4683327, US Patent No. 5622648, US Patent No. 5770107, WO95/22586, WO95/24455, WO97/00600, WO98/23580, WO98/52905, JPA No. 1-272551, JPA No. 6-16616, JPA No. 7-110469, JPA No. 11-80081 and JPA No. 2001-328973. Plural types of polymerizable rod-like liquid crystal compounds may be used in combination. Using plural types of polymerizable rod-like liquid crystal compounds may contribute to lowering the alignment temperature.

(2) Optically-Active Compound (Chiral Agent)

The liquid crystal composition is capable of forming a cholesteric liquid crystal phase, and preferably contains a optically-active compound. However, if the rod-like liquid crystal compound having a chiral carbon in its molecule is used, some of the compositions containing such a rod-like liquid crystal compound may be capable of stably forming a cholesteric liquid crystal phase even if they don't contain any optically-active compound. The optically-active compound may be selected from any known chiral agents such as those used in twisted-nematic (TN) and super-twisted-nematic (STN) modes, which are described, for example, in "Ekisho Debaisu Handobukku (Liquid Crystal Device Handbook)" , Third Chapter, 4-3 Chapter, p.199, edited by No. 142 Committee of Japan Society for the Promotion of Science, published by the Nikkan Kogyo Shimbun, Ltd., in 1989. Although, generally, an optically-active compound has a chiral carbon in

its molecule, axially chiral compounds and planar chiral compound, having no chiral carbon, may be used as a chiral compound in the invention. Examples of the axially chiral compound or the planar chiral compound include binaphthyl, helicene, paracyclophane and derivatives thereof. The optically-active compound (chiral compound) may have at least one polymerizable group. Using a polymerizable optically-active compound along with a polymerizable rod-like compound, it is possible to obtain a polymer having repeating units derived from the optically-active compound and the rod-like liquid crystal compound respectively by carrying out the polymerization thereof. In such an embodiment, the polymerizable group in the optically-active compound is preferably same as that in the rod-like liquid crystal compound. Accordingly, the polymerizable group in the optically-active compound is preferably selected from an unsaturated polymerizable group, epoxy group and aziridinyl group; and an unsaturated polymerizable group is preferable; and an ethylene unsaturated polymerizable group is especially preferable.
The optically-active compound may be selected from liquid crystal compounds.

An amount of the optically-active compound is preferably from 1 to 30 % by mole with respect to an amount of the rod-like liquid crystal compound used along with it. A smaller amount of the optically-active compound is more preferable since influence thereof on liquid crystallinity may be small. Accordingly, optically-active compounds having a strong helical twisting power are preferable since they may achieve the desired helical pitch by being added in a small amount. Examples of such an optically-active compound having a strong helical twisting power include those described in JPA 2003-287623.

According to the infrared-light reflective plate of the invention, the light reflective layers, formed of a cholesteric liquid crystal phase with a helical direction opposite to each other, are adjacent to each other. One feature of the invention resides in that the upper layer of the pair of the light reflective layers adjacent to each other has the larger refractive anisotropy compared with the lower layer thereof. As described above, the refractive anisotropy of a layer is affected by the refractive anisotropy of the liquid crystal material to be used for preparing the layer or an amount of the chiral agent to be added to the layer. The number of commercially available right-rotation chiral agents having a strong twisting force is larger than that of commercially available left-rotation chiral agents having a strong twisting force. Therefore, a necessary amount of the right-rotation chiral agent may be less than that of the left-rotation chiral agent for preparing a cholesteric liquid crystal phase having a same helical pitch, which results in forming the layer having the smaller refractive anisotropy, $\Delta$ n. The embodiment wherein the composition containing any right-rotation chiral agent is used for preparing the lower light reflective layer and the composition containing any left-rotation chiral agent is used for preparing the upper light reflective layer is preferable since the scope of choices of the materials is widened.

(3) Polymerization Initiator

The liquid crystal composition to be used for preparing each of the light-reflective layers is preferably a polymerizable liquid crystal composition; and on its own, the composition preferably contains at least one polymerization initiator. According to the invention, the polymerization may be carried out under irradiation of ultraviolet light, and the polymerization initiator is preferably selected from photo-polymerization initiators capable of initiating polymerizations by irradiation of ultraviolet light. Examples of the photo-polymerization initiator include a-carbonyl compounds (those described in U.S. Patent Nos. 2367661 and 2367670), acyloin ethers (those described in U.S. Patent No. 2448828), a-hydrocarbon-substituted aromatic acyloin compounds (those described in U.S. Patent No. 2722512), polynuclear quinone compounds (those described in U.S. Patent Nos. 3046127 and 2951758), combinations of triarylimidazole dimer and p-aminophenyl ketone (those described in U.S. Patent No. 3549367), acrydine and phenazine compounds (those described in Japanese Laid-Open Patent Publication "Tokkai" No. S60-105667 and U.S. Patent No. 4239850), and oxadiazole compounds (those described in U.S. Patent No. 4212970).

An amount of the photo-polymerization initiator is preferably from 0.1 to 20 % by mass, more preferably from 1 to 8 % by mass, with respect to the liquid crystal composition (the solid content when the composition is a coating liquid).

(4) Alignment Controlling Agent

Any alignment controlling agent, which can contribute to stably or promptly forming a cholesteric liquid crystal phase, may be added to the liquid crystal composition. Examples of the alignment controlling agent include fluorine-containing (meth)acrylate series polymers and compounds represented by formula (X1)-(X3). Two or more types selected from these compounds may be used in combination. These compounds may contribute to aligning liquid crystal molecules with a small tilt angle or horizontally at the air-interface alignment. It is to be understood that the term "horizontal alignment" in the specification means that the direction of long axis of a liquid crystalline molecule is parallel to the layer plane, wherein strict parallelness is not always necessary; and means, in this *specification,* that a tilt angle of the mean direction of long axes of liquid crystalline molecules with respect to the horizontal plane is smaller than 20°. The layer in which liquid crystal molecules are horizontally aligned at the air-interface may hardly suffer from alignment defects, and may have a high transparency for a visible light and have a high reflection rate. On the other hand, the layer in which liquid

crystal molecules are aligned with a large tilt angle may suffer from the finger-print pattern, and may have a low reflective rate, high haze and diffraction characteristics, because of the misalignment between the helical axis of the cholesteric liquid crystal phase and the normal line of the layer surface.
Examples of the fluorine-containing (meth)acrylate series polymer, which can be used as an alignment controlling agent, include those described in JPA 2007-272185, [0018]-[0043].

The compounds represented by formula (X1)-(X3), which can be used as an alignment controlling agent, will be describe in detail respectively.

[Formula 1]

(X1)

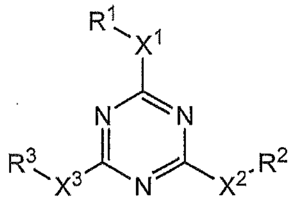

In the formula, $R^1$, $R^2$ and $R^3$ each independently represent a hydrogen atom or a substituent group; $X^1$, $X^2$ and $X^3$ each independently represent a single bond or divalent linking group. The substituent group represented by $R^1$-$R^3$ respectively is preferably a substituted or non-substituted alkyl group (more preferably a non-substituted alkyl or a fluorinated alkyl group), an aryl group (more preferably an aryl group having at least one fluorinated alkyl group), a substituted or non-substituted amino group, an alkoxy group, an alkylthio group, or a halogen atom. The divalent linking group represented by $X^1$, $X^2$ and $X^3$ respectively is preferably selected from the group consisting of an alkylene group, an alkenylene group, a divalent aryl group, a divalent heterocyclic group, -CO-, -$NR^a$- (where $R^a$ represents a $C_{1-5}$ alkyl group or a hydrogen atom), -O-, -S-, -SO-, -$SO_2$- and any combinations thereof. The divalent linking group is preferably selected from the group consisting of an alkylene group, a phenylene group, -CO-, -$NR^a$-, -O- -S-, -$SO_2$- and any combinations thereof. The number of carbon atom(s) in the alkylene group is preferably from 1 to 12. The number of carbon atoms in the alkenylene group is preferably from 2 to 12. The number of carbon atoms in the aryl group is preferably from 6 to 10.

[Formula 2]

(X2)

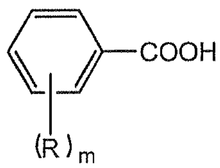

In the formula, R represents a substituent group; and m is an integer of from 0 to 5. When m is equal to or more than 2, two or more R are same or different from each other. Preferable examples of the substituent group represented by R are same as those exemplified above as an example of $R^1$, $R^2$ or $R^3$ in formula (X1). In the formula, m is preferably from 1 to 3, and is especially preferably 2 or 3.

[Formula 3]

(X3)

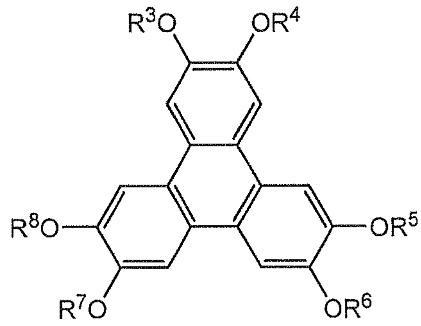

In the formula, $R^4$, $R^5$, $R^6$, $R^7$, $R^8$ and $R^9$ each independently represent a hydrogen atom or a substituent group. Preferable examples of $R^4$, $R^5$, $R^6$, $R^7$, $R^8$ or $R^9$ include those exemplified above as an example of $R^1$, $R^2$ or $R^3$ in formula (X1).

Examples of the compound represented by formula (X1), (X2) or (X3), which can be used as an alignment controlling agent, include the compounds described in JPA 2005-99248.

One compound of formula (X1), (X2) or (X3) may be used alone, or two or more compounds of formula (X1), (X2) or (X3) may be used in combination.

An amount of the compound represented by formula (X1), (X2) or (X3) to be added to the liquid crystal composition is preferably from 0.01 to 10 % by mass, more preferably from 0.01 to 5 % by mass, or especially preferably from 0.02 to 1 by mass, with respect to an amount of the liquid crystal compound.

2. Substrate

The infrared-light reflective plate of the invention has a substrate, and the substrate may not be limited in terms of materials or optical properties as long as it is self-supporting and can support the light-reflective layers. In some applications, the substrate may be required to have a high transmission for a visible light. The substrate may be selected from specific retardation plates such as a λ/2 plate, which are produced according to the method controlled for obtaining the specific optical properties; or the substrate may be selected from polymer films of which variation in in-plane retardation is large, more particularly, fluctuation in Re (1000), which is in-plane retardation at a wavelength of 1000nm, is equal to or more than 20nm or 100 nm, which cannot be used as a specific retardation plate. For example, a retarder or the like of which in-plane retardation at a wavelength of 1000 nm, Re(1000) is from 800 to 13000 nm may be used.

Polymer films having a high transmission for a visible light include those used in display devices such as a liquid crystal display device as an optical film. Preferable examples of the polymer film which can be used as a substrate include poly ester films such as polyethylene terephthalate (PET), polybutylene and polyethylene naphthalate (PEN) films; polycarbonate (PC) films; polymethylmethacrylate films; polyolefin films such as polyethylene and polypropylene films; polyimide films, triacetyl cellulose (TAC) films.

3. Production Method for Infrared-light reflective plate

Preferably, the infrared-light reflective plate of the invention is produced according to a coating method. One example of the production method includes at least the following steps:

(1) applying a curable liquid-crystal composition to the surface of a substrate or the like to form a cholesteric liquid-crystal phase thereon, and

(2) irradiating the curable liquid-crystal composition with ultraviolet light for promoting the curing reaction, thereby fixing the cholesteric liquid-crystal phase and then forming a light-reflective layer.

The steps of (1) and (2) are repeated two times on one surface of a substrate and repeated two times on another surface of the substrate, or the steps of (1) and (2) are repeated two times both of the surfaces of a substrate at the same time, thereby to produce the infrared-light reflective plate as shown in FIG. 1. The steps of (1) and (2) are repeated four times on one surface of a substrate and repeated four times on another surface of the substrate, or the steps of (1) and (2) are repeated four times both of the surfaces of a substrate at the same time, thereby to produce the infrared-light reflective plate as shown in FIG. 2.

In the step (1), first, a curable liquid-crystal composition is applied onto the surface of a substrate or an undercoat layer. The curable liquid-crystal composition is preferably prepared as a coating liquid of the material dissolved and/or

dispersed in a solvent. The coating liquid may be applied to the substrate or the like, according to various methods of a wire bar coating method, an extrusion coating method, a direct gravure coating method, a reverse gravure coating method, a die coating method or the like. As the case may be, an inkjet apparatus may be used in which a liquid-crystal composition may be jetted out through a nozzle to form the intended coating film.

Next, the coating film of the curable liquid-crystal composition formed on the surface of the substrate or the like is made to have a cholesteric liquid-crystal phase. In an embodiment where the curable liquid-crystal composition is prepared as a coating liquid that contains a solvent, the coating film may be dried to remove the solvent, thereby the coating film may be made to have the intended cholesteric liquid-crystal phase. If desired, the coating film may be heated up to the transition temperature to the cholesteric liquid-crystal phase. For example, the coating film is once heated up to the temperature of the isotropic phase, and then cooled to the cholesteric liquid-crystal phase transition temperature, whereby the film may stably have the intended cholesteric liquid-crystal phase. The liquid-crystal transition temperature of the curable liquid-crystal composition is preferably within a range of from 10 to 250 degrees Celsius from the viewpoint of the production aptitude, more preferably within a range of from 10 to 150 degrees Celsius. When the temperature is lower than 10 degrees Celsius, the coating film may require a cooling step or the like for cooling it to the temperature range within which the film could exhibit a liquid-crystal phase. On the other hand, when the temperature is higher than 200 degrees Celsius, the coating film may require a higher temperature in order that it could be in an isotropic liquid state at a higher temperature than the temperature range within which the film once exhibits a liquid-crystal phase; and this is disadvantageous from the viewpoint of heat energy dissipation, substrate deformation, degradation, etc.

Next, in the step (2), the coating film in a cholesteric liquid-crystal state is irradiated with ultraviolet light to promote the curing reaction thereof. For ultraviolet irradiation, used is a light source of an ultraviolet lamp or the like. In this step, the ultraviolet irradiation promotes the curing reaction of the liquid-crystal composition, and the cholesteric liquid-crystal phase is thereby fixed and the intended light-reflective layer is thus formed.

The ultraviolet irradiation energy dose is not specifically defined, but in general, it is preferably from 100 $mJ/cm^2$ to 800 $mJ/cm^2$ or so. Not specifically defined, the time for ultraviolet radiation to the coating film may be determined from the viewpoint of both the sufficient strength of the cured film and the producibility thereof.

For promoting the curing reaction, ultraviolet irradiation may be attained under heat. The temperature in ultraviolet irradiation is preferably kept within a temperature range within which the cholesteric liquid-crystal phase can be kept safely as such with no disturbance. The oxygen concentration in the atmosphere participates in the degree of polymerization of the cured film. Accordingly, in case where the cured film could not have the intended degree of polymerization in air and the film strength is therefore insufficient, preferably, the oxygen concentration in the atmosphere is lowered according to a method of nitrogen purging or the like. The preferred oxygen concentration is at most 10%, more preferably at most 7%, most preferably at most 3%. The reaction rate of the curing reaction (for example, polymerization reaction) to be promoted by the ultraviolet irradiation is preferably at least 70% from the viewpoint of keeping the mechanical strength of the layer and for the purpose preventing unreacted matters from flowing out of the layer, more preferably at least 80%, even more preferably at least 90%. For increasing the reaction rate, a method of increasing the ultraviolet irradiation dose or a method of carrying out the polymerization in a nitrogen atmosphere or under a heating condition may be effective. Also employable is a method of keeping the polymerization system, after once polymerized, in a higher temperature condition than the polymerization temperature to thereby further promote the thermal polymerization reaction, or a method of again irradiating the reaction system with ultraviolet light (in this, however, the additional ultraviolet irradiation should be attained under the condition that satisfies the condition of the invention). The reaction rate may be determined by measuring the infrared oscillation spectrum of the reactive group (for example, the polymerizing group) before and after the reaction, followed by comparing the data before and after the reaction.

In the above step, the cholesteric liquid-crystal phase is fixed and the intended light-reflective layer is thereby formed. A most typical and preferred embodiment of the "fixed" liquid-crystal state is such that the alignment of the liquid-crystal compound to form the cholesteric liquid-crystal phase is held as such, to which, however, the invention is not limited. Concretely, the fixed state means that, in a temperature range of generally from 0 to 50 degrees Celsius, or from -30 to 70 degrees Celsius under a severer condition, the layer does not have flowability and does not undergo any alignment morphology change in an external field or by an external force applied thereto, and the layer can continue to stably keep the fixed alignment morphology. In the invention, the alignment state of the cholesteric liquid-crystal phase is fixed through the curing reaction as promoted by ultraviolet irradiation.

In the invention, it is enough that the optical properties of the cholesteric liquid-crystal phase are held in the layer, and finally it is any more unnecessary that the liquid-crystal composition in the light-reflective layer exhibits liquid crystallinity. For example, the liquid-crystal composition may be converted to a high-molecular weight substance and may lose the liquid crystallinity.

4. Easy-Adhesion Layer

As described above, the infrared-light reflective plate of the invention may have an easy-adhesion layer as at

least one most-outer layer thereof. Usually, a laminated glass is prepared by thermal compression bonding of an interlayer which is formed on the inner surfaces of two glass plates. When the laminate having one or plural light reflective layers formed of a cured cholesteric liquid crystal phase is incorporated into the two glass plates, the surface of the light reflective layer is subjected to thermal compression bonding to the interlayer. However, the adhesive ability between them is insufficient, and air bubbles are generated between them when being subjected to an irradiation of natural light for a long time and being heated, which result in lowering the transparency. According to the infrared-light reflective plate of the invention having an easy-adhesion layer as an outermost layer, the surface of the easy-adhesion layer can be subjected to thermal compression bonding to the interlayer. Therefore, the adhesive ability is improved, which result in improving the light-resistance.

Polyvinyl butyral is a type of polymer, having a repeating unit shown below, which can be obtained by reacting polyvinyl alcohol with butylaldehyde in a presence of acid catalyst.

[Formula 4]

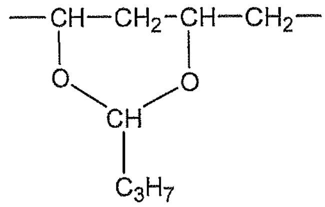

The easy-adhesion layer is preferably prepared by coating. For example, the easy-adhesion layer may be formed on the surface of the cholesteric liquid crystal layer and/or the rear face of the substrate (the face of the substrate having no light-reflective layer thereon) by coating. More specifically, the light-reflective layer may be prepared as follows. A coating liquid is prepared by dissolving at least one polyvinyl butyral in an organic solvent, and is applied to the surface of the cholesteric liquid crystal layer and/or the rear face of the substrate (the face of the substrate having no light-reflective layer thereon), is dried, if necessary, under heat to form an easy-adhesion layer. Examples of the solvent to be used for preparing the coating liquid include methoxy propyl acetate (PGMEA), methylethyl ketone (MEK) and iso-propanol (IPA). Any known coating methods may be used. The preferable range of the temperature for drying may vary depending on the types of the materials used for preparing the coating liquid, and, generally, is from about 140 degrees Celsius to about 160 degrees Celsius. The period for drying is not limited, and, generally, is from about five minutes to ten minutes.

As describe above, any ultraviolet absorber is preferably added to the easy-adhesion layer. Especially, the ultraviolet absorber may be added to the easy-adhesion layer disposed between the glass plate, which is disposed outside, and the reflective layer of a cholesteric liquid crystal phase. Examples of the ultraviolet absorber which can be used in the invention include organic ultraviolet absorbers such as benzotriazole series, benzodithiol series, coumarin series, benzophenone series, salicylate ester series, and cyano acrylate series ultraviolet absorbers; and titanium oxide and zinc oxide. Especially preferable examples of the ultraviolet absorber include "Tinuvin326", "Tinuvin 328" and "Tinuvin479" (all of which are commercially available from Ciba-Geigy Japan Ltd.). The kind and an amount of the ultraviolet absorber are not limited, and may be decided depending on the purpose. If the easy-adhesion layer, containing the ultraviolet absorber, can make the transmittance for the ultraviolet light with a wavelength of 380nm or shorter equal to or smaller than 0. 1 %, the yellowish coloration caused by the ultraviolet light can be significantly reduced, which is preferable. Therefore, it is preferable that the kind and an amount of the ultraviolet absorber are decided so as to achieve the properties.

The present invention relates to an infrared-light reflective laminated glass using the infrared-light reflective plate of the invention; and more specifically, the present invention relates to an infrared-light laminated glass comprising two glass plates, and, between them, the infrared-light reflective plate of the present invention. Using the infrared-light reflective plate having an easy-adhesion layer as an outermost layer is preferable.

5. Glass Plates for Laminated Glass

The two glass plates to be used for preparing the laminated glass may be selected from conventional glass plate, having an interlayer on the inner surface, for laminated glasses. Generally, the interlayer contains polyvinyl butyral (PVB) resin or ethylene-vinyl acetate copolymer (EVA) as a main ingredient. The easy-adhesion layer may have a good adhesive ability to the interlayer containing any material selected therefrom as a main ingredient. The easy-adhesion

layer is especially excellent in the high adhesive ability in thermal compressive bonding to the interlayer containing polyvinyl butyral resin as a main ingredient.

The thickness of the glass plate is not limited, and the preferable range of the thickness may vary depending on the applications thereof. For examples, in the applications of a front window (windshield) for transport vehicles, generally, the glass plates having the thickness of from 2.0 to 2.3 mm are preferably used However, the thickness of the glass plate is not limited to the range. The thickness of the interlayer is, usually, from 380 to 760 micro meters.

6. Use of Infrared-light reflective plate or Infrared-light reflective laminated glass

The infrared-light reflective plate or the infrared-light reflective laminated glass of the invention exhibits a selective reflectivity characteristic with a reflection peak of 700nm or longer (or more preferably from 800 to 1300nm). The reflector having such a specific characteristic may be stuck on the windows of building structures such as houses, office buildings, etc., or to the windows of vehicles such as automobiles, etc., as a sunlight-shielding member. In addition, the infrared-light reflective plate of the invention may be used directly as a sunlight-shielding member by itself (for example, as heat-shielding glass, heat-shielding film).

The infrared-light reflective plate or the infrared-light reflective laminated glass of the invention may achieve the maximum reflective ratio of 90% or higher for sunlight of from 800 to 1300nm, and the maximum reflective ratio of 100% is most preferable.

Other important properties of the infrared-light reflective plate or the infrared-light reflective laminated glass are visible light transmittance and haze. By suitably selecting the material and suitably controlling the production condition and others and depending on the intended end-usage thereof, the invention can provide an infrared-light reflective plate having a preferred visible light transmittance and a preferred haze. For example, in an embodiment for use that requires a high visible transmittance, the invention can provide an infrared-light reflective plate or an infrared-light laminated glass having a visible light transmittance of at least 90% and having an infrared reflectivity that satisfies the above described scope.

[EXAMPLES]

Paragraphs below will further specifically describe features of the present invention, referring to Examples and Comparative Examples. Any materials, amount of use, ratio, details of processing, procedures of processing and so forth shown in Examples may appropriately be modified without departing from the spirit of the present invention. Therefore, it is to be understood that the scope of the present invention should not be interpreted in a limited manner based on the specific examples shown below.

Coating Liquids (A), (B), (C), (D), (E) and (F) having the following formulation shown in the table were prepared respectively.

[Table 1]

| Formulation of Coating Liquid (A) | | |
|---|---|---|
| Materials (types) | Name (producer) | Amount |
| Rod-like liquid crystal compound | RM-257 (Merck) | 10.000 parts by mass |
| Chiral agent | LC-756 (BARF) | 0.293 parts by mass |
| Polymerization initiator | Irg-819 (Ciba Specialty Chemicals) | 0.419 parts by mass |
| Alignment controlling agent | Compound 1 shown below | 0.016 parts by mass |
| Solvent | 2-butanone (Wako) | 15.652 parts by mass |

[Table 2]

| Formulation of Coating Liquid (B) | | |
|---|---|---|
| Materials (types) | Name (producer) | Amount |
| Rod-like liquid crystal compound | RM-257 (Merck) | 10.000 parts by mass |

(continued)

| Formulation of Coating Liquid (B) | | |
|---|---|---|
| Materials (types) | Name (producer) | Amount |
| Chiral agent | Compound 2 shown below | 0,183 parts by mass |
| Polymerization initiator | Irg-819 (Ciba Specialty Chemicals) | 0.419 parts by mass |
| Alignment controlling agent | Compound 1 shown below | 0.016 parts by mass |
| Solvent | 2-butanone (Wako) | 15.652 parts by mass |

[Table 3]

| Formulation of Coating Liquid (C) | | |
|---|---|---|
| Materials (types) | Name (producer) | Amount |
| Rod-like liquid crystal compound | RM-257 (Merck) | 10.000 parts by mass |
| Chiral agent | LC-756 (BASF) | 0.244 parts by mass |
| Polymerization initiator | Irg-819 (Ciba Specialty Chemicals) | 0,419 parts by mass |
| Alignment controlling agent | Compound 1 shown below | 0.016 parts by mass |
| Solvent | 2-butanone (Wako) | 15.652 parts by mass |

[Table 4]

| Formulation of Coating Liquid (D) | | |
|---|---|---|
| Materials (types) | Name (producer) | Amount |
| Rod-like liquid crystal compound | RM-257 (Merck) | 10.000 parts by mass |
| Chiral agent | Compound 2 shown below | 0.153 parts by mass |
| Polymerization initiator | Irg-819 (Ciba Specialty Chemicals) | 0.419 parts by mass |
| Alignment controlling agent | Compound 1 shown below | 0.016 parts by mass |
| Solvent | 2-butanone (Wako) | 15.652 parts by mass |

[Table 5]

| Formulation of Coating Liquid (E) | | |
|---|---|---|
| Materials (types) | Name (producer) | Amount |
| Rod-like liquid crystal compound | LC-1057 (BASF) | 10.000 parts by mass |
| Chiral agent | LC-756 (BASF) | 0.332 parts by mass |
| Polymerization initiator | Irg-819 (Ciba Specialty Chemicals) | 0.419 parts by mass |
| Alignment controlling agent | Compound 1 shown below | 0.016 parts by mass |
| Solvent | 2-butanone (Wako) | 15.652 parts by mass |

[Table 6]

| Formulation of Coating Liquid (F) | | |
|---|---|---|
| Materials (types) | Name (producer) | Amount |
| Rod-like liquid crystal compound | LC-1057 (BASF) | 10.000 parts by mass |
| Chiral agent | LC-756 (BASF) | 0.276 parts by mass |
| Polymerization initiator | Irg-819 (Ciba Specialty Chemicals) | 0,419 parts by mass |
| Alignment controlling agent | Compound 1 shown below | 0.016 parts by mass |
| Solvent | 2-butanone (Wako) | 15.652 parts by mass |

[Formula 5]

Alignment controlling agent: Compound 1 (described in JP-A 2005-99248)

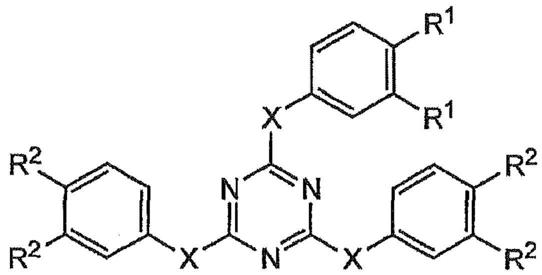

| $R^1$ | $R^2$ | X |
|---|---|---|
| $O(CH_2)_2O(CH_2)_2(CF_2)_6F$, | $O(CH_2)_2O(CH_2)_2(CF_2)_6F$ | NH |

[Formula 6]

Chiral Agent: Compound 2 (described in JP-A 2002-179668)

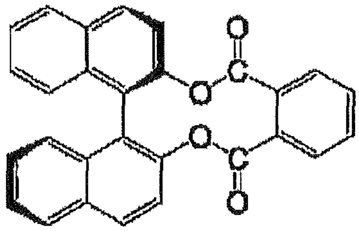

(1) Using a wire bar, each coating liquid was applied onto the PET film (manufactured by FUJIFILM) so as to have a dry thickness of 6 micro meters, at room temperature. The fluctuation in Re(1000) of each of the PET film is shown in the following.

(2) This was dried at room temperature for 30 seconds to remove the solvent, and then heated in an atmosphere at 125 degrees Celsius for 2 minutes and thereafter at 95 degrees Celsius to form a cholesteric liquid-crystal phase.

Next, using Fusion UV Systems' electrodeless lamp "D Bulb" (90 mW/cm), this was UV-irradiated at a power of 60% for 6 to 12 seconds, whereby the cholesteric liquid-crystal phase was fixed to form a film (light-reflective layer).
(3) After this was cooled to room temperature, the above steps (1) and (2) were repeated on another surface of the PET film.

According to the above-described process, the infrared-light reflective plates shown in the following tables were produced respectively.
Regarding each of the produced reflective plates, the shielding ability of reflecting the solar spectrum of from 900 to 1300nm was measured by using a spectrophotometer.
Re of all of the PET films used as a substrate was from about 4000 to about 5000nm. Re of the PET film used in Comparative Example 3 was 4050nm.
The Re-fluctuation of the substrate in the following table means the fluctuation in Re(1000), which is retardation in plane at a wavelength of 1000nm. It is difficult to measure the accurate value of Re of a film having large Re by using an usual retardation measuring device, and the accurate value is derived as follows. The measurement is carried out by using a spectrum meter attached to a polarization microscope. At first, an interference filter of which the center transmittance wavelength λ is known is inserted into the light path of the polarization microscope, and the degree (Re/λ) of frontal Re is understood by observation of the conoscopic figure of a sample. The value of "frontal Re" means a value of Re measured for the incident light entering the sample film along the normal direction of the sample film. If the sample film is biaxial, the figure with the degree of 0, or that is, the basic point is viewable, and the degree of Re is decided on the basis of the number of the interference band emerging from the basic point to the vertical incidence-position of the figure. If the sample film is monoaxial or the figure with the degree of 0 isn't viewable, the degree of Re is decided by depositing a retardation film, of which Re is known, on the sample film so that the slow axes thereof are perpendicular to each other and so that the vertical incidence-position of the figure becomes closer to the interference color with the degree of 0. Next, the polarization microscope is put into the ortho-scope mode, and then, the polarization microscope spectrum measurement of the sample film is conducted at the diagonal position. The transmittance becomes the local minimal value when the degree is any of integers including 0, and it becomes the local maximal value when the degree is (2n+1)/2 (n is any of integers including 0); and therefore, Re at the wavelengths providing the local minimal and maximal values respectively can be determined by using the degree at the center transmittance wavelength λ of the interference filter which is obtained in the above-described manner. Re at 1000nm is obtained by extrapolating the obtained values according to the quartic curve-approximation against the wavelength.
[Table 7]

| | Light reflective layer X2 | Light reflective layer X1 | Substrate | Light reflective layer Y1 | Light reflective layer Y2 | Maximum Reflectance |
|---|---|---|---|---|---|---|
| Example1 | Coating Liquid (B)<br>Left-Circulady Polarized<br>Light Reflectivity<br>Dry thickness: 6μm<br>Δn:0.150 Center Wavelength of Reflectivity: 1000nm | Coating Liquid (A)<br>Right-Circularly Polarized<br>Light Reflectivity<br>Dry thickness:6pm<br>Am:0.180 Center Wavelength of Reflectivity: 1000nm | PET film<br>Fluctuation of Re: 20nm | Coating Liquid (C)<br>Right-Circularly Polarized<br>Light Reflectivity<br>Dry thickness: 6μm<br>Δn:0.170 center Wavelength of Reflectivity: 1200nm | Coating Liquid (D)<br>Left-Circularly Polarized<br>Light Reflectivity<br>Dry thickness: 6μm<br>Δn:0.140 Center Wavelength of Reflectivity: 1200nm | o 90% |
| Example 2 | Coating Liquid(B)<br>Left-Circularly Polarized<br>Light Reflectivity<br>Dry thickness: 6μm<br>Δn:0.150 Center Wavelength of Reflectivity: 1000nm | Coating Liquid(A)<br>Right-Circularly Polarized<br>Light Reflectivity<br>Dry thickness: 6μm<br>Δn:0.180 Center Wavelength of Reflectivity: 1000nm | PET film<br>Fluctuation of Re: 100nm | Coating Liquid(C)<br>Right-Circularly Polarized<br>Light Reflectivity<br>Dry thickness: 6μm<br>Δn:0.170 Center Wavelength of Reflectivity: 1200nm | Coating Liquid(D)<br>Left-Circutarty Polarized<br>Light Reflectivity<br>Dry thickness: 6μm<br>Δn:0.140 Center Wavelength of Reflectivity: 1200nm | o 90% |
| Example 3 | Coating Liquid(B)<br>Left Circularly Polarized<br>Light Reflectivity<br>Dry thickness: 6μm<br>Δn:0.150 Center Wavelength of Reflectivity: 1000nm | Coating Liquid(E)<br>Right-Circularly Polarized<br>Light Reflectivity:<br>Dry thickness: 6μm<br>Δn:0.210 Center Wavelength of Reflectivity: 1000nm | PET film<br>Fluctuation of Re: 20nm | Coating Liquid(F)<br>Right-Circularly Polarized<br>Light Reflectivity<br>Dry thickness: 6μm<br>Δn:0.200 Center Wavelength of Reflectivity: 1200nm | Coating Liquid(D)<br>Left-Circularly Polarized<br>Light Reflectivity<br>Dry thickness: 6μm<br>Δn:0.140 Center Wavelength of Reflectivity: 1200nm | o 65% |
| Example 4 | Coating Liquid(B)<br>Left-Circularly Polarized<br>Light Reflectivity<br>Dry thickness: 6μm<br>Δn:0.150 Center Wavelength of Reflectivity: 1000nm | Coating Liquid(E)<br>Right-Circularly Polarized<br>Light Reflectivity<br>Dry thickness: 6μm<br>Δn:0.210 Center Wavelength of Reflectivity: 1000nm | PET film<br>Fluctuation of Re: 100nm | Coating Liquid(F)<br>Right-Circularly Polarized<br>Light Reflectivity<br>Dry thickness: 6μm<br>Δn:0.200 Center Wavelength of Reflectivity: 1200nm | Coating Liquid(D)<br>Left-Circularly Polarized<br>Light Reflectivity<br>Dry thickness: 6μm<br>Δn:0.140 Center Wavelength of Reflectivity: 1200nm | o 95% |

(continued)

| | Light reflective layer X2 | Light reflective layer X1 | Substrate | Light reflective layer Y1 | Light reflective layer Y2 | Maximum Reflectance |
|---|---|---|---|---|---|---|
| Comparative Example 1 | Coating Liquid(A) Right Circularly Polarized Light Reflectivity Dry thickness: 6$\mu$m $\Delta$n:0.180 Center Wavelength of Reflectivity: 1000nm | Coating Liquid(D) Left-Circularly Polarized Light Reflectivity Dry thickness: 6$\mu$m $\Delta$n:0.170 Center Wavelength of Reflectivity: 1200nm | PET film Fluctuation of Re: 100nm | Coating Liquid(B) Left-Circularly Polarized Light Reflectivity Dry thickness: 6$\mu$m $\Delta$n:0.170 Center Wavelength of Reflectivity: 1000nm | Coating Liquid(C) Right-Circularly Polarized Light Reflectivity Dry thickness: 6$\mu$m $\Delta$n:0.140 Center Wavelength of Reflectivity: 1200nm | x 80% |
| Comparative Example 2 | Coating Liquid(C) Right-Circularly Polarized Light Reflectivity Dry thickness: 6$\mu$m $\Delta$n:0.140 Center Wavelength of Reflectivity: 1200nm | Coating Liquid(A) Right-Circularly Polarized Light Reflectivity Dry thickness: 6$\mu$m $\Delta$n:0.180 Center Wavelength of Reflectivity: 1000nm | PET film Fluctuation of Re: 100nm | Coating Liquid(B) Left Circularly Polarized Light Reflectivity Dry thickness: 6$\mu$m $\Delta$n:0.150 Center Wavelength of Reflectivity: 1000nm | Coating Liquid(D) Left-Circularly Polarized Light Reflectivity Dry thickness: 6$\mu$m $\Delta$n:0.140 Center Wavelength of Reflectivity: 1200nm | x 65% |
| Comparative Example 3 | Coating Liquid(C) Right-Circularly Polarized Light Reflectivity Dry thickness: 6$\mu$m $\Delta$n:0.140 Center Wavelength of Reflectivity: 1200nm | Coating Liquid(A) Right Circularly Polarized Light Reflectivity Dry thickness: 6$\mu$m $\Delta$n:0.180 Center Wavelength of Reflectivity: 1000nm | PET film Fluctuation of Re: 5nm | Coating Liquid(B) Left-Circularly Polarized Light Reflectivity Dry thickness: 6$\mu$m $\Delta$n:0.150 Center Wavelength of Reflectivity: 1000nm | Coating Liquid(D) Left-Circularly Polarized Light Reflectivity Dry thickness: 6$\mu$m $\Delta$n:0.140 Center Wavelength of Reactivity: 1200nm | o 90% |

DESCRIPTION OF REFERENCE NUMERALS

| | |
|---|---|
| 10, 10' | infrared-tight reflective plate (Present Invention) |
| 12 | Substrate |
| 14a | Light-Reflective Layer (light-reflective layer X1) |
| 14b | Light-Reflective Layer (light-reflective layer X2) |
| 16a | Light-Reflective Layer (light-reflective layer Y1) |
| 16b | Light-Reflective Layer (light-reflective layer Y2) |
| 18a | Light-Reflective Layer (light-reflective layer X3) |
| 18b | Light-Reflective Layer (light-reflective layer X4) |
| 20a | Light-Reflective Layer (light-reflective layer Y3) |
| 20b | Light-Reflective Layer (light-reflective layer Y4) |

## Claims

1. An infrared-light reflective plate reflecting an infrared-light of equal to or longer than 700nm comprising
a substrate of which fluctuation of retardation in plane at a wavelength of 1000nm, Re(1000), is equal to or more than 20nm, on a surface of the substrate,
at least two light-reflective layers, X1 and X2, formed of a fixed cholesteric liquid crystal phase, and disposed in this order from the substrate, and, on another surface of the substrate,
at least two light-reflective layers, Y1 and Y2, formed of a fixed cholesteric liquid crystal phase, and disposed in this order from the substrate, wherein
the reflection center wavelengths of the light-reflective layers X1 and X2 are same with each other and are $\lambda_{X1}$ (nm), and the two layers reflect circularly-polarized light in opposite directions;
the reflection center wavelengths of the light-reflective layers Y1 and Y2 are same with each other and are $\lambda_{Y1}$ (nm), and the two layers reflect circularly-polarized light in opposite directions;
$\lambda_{X1}$ and $\lambda_{Y1}$ are not same; and
refractive anisotropy of the light reflective layers X1 and X2, $\Delta n_{X1}$ and $\Delta n_{X2}$ satisfy the relation of $\Delta n_{X2}<\Delta n_{X1}$, and refractive anisotropy of the light reflective layers Y1 and Y2, $\Delta n_{Y1}$, and $\Delta n_{Y2}$ satisfy the relation of $\Delta n_{Y2}<\Delta n_{Y1}$.

2. The infrared-light reflective plate of claim 1, wherein
the fluctuation of Re(1000) of the substrate is equal to or more than 100nm.

3. The infrared-light reflective plate of claim 1 or 2, wherein
the reflection center wavelength $\lambda_{X1}$ (nm) of the light-reflective layers X1 and X2 falls within a range of from 900 to 1050 nm, and
the reflection center wavelength $\lambda_{Y1}$ (nm) of the light-reflective layers Y1 and Y2 falls within a range of from 1050 to 1300 nm.

4. The infrared-light reflective plate of any one of claims 1 to 3, wherein each of the light reflective layers X2 and Y2 is a layer which is formed by fixing a cholesteric liquid crystal phase of a liquid crystal composition applied to a surface of the light reflective layers X1 and Y1 respectively.

5. The infrared-light reflective plate of any one of claims 1 to 4, of which retardation in plane at a wavelength of 1000nm, Re(1000), is from 800 to 13000nm.

6. The infrared-light reflective plate of any one of claims 1 to 5, comprising
two light-reflective layers, X3 and X4, formed of a fixed cholesteric liquid crystal phase, and disposed on the light reflective layer X2, and,
two light-reflective layers, Y3 and Y4, formed of a fixed cholesteric liquid crystal phase, and disposed on the light reflective layer Y2, wherein
the reflection center wavelengths of the light-reflective layers X3 and X4 are same with each other and are $\lambda_{X3}$ (nm), and the two layers reflect circularly-polarized light in opposite directions;
the reflection center wavelengths of the light-reflective layers Y3 and Y4 are same with each other and are $\lambda_{Y3}$ (nm), and the two layers reflect circularly-polarized light in opposite directions; and

$\lambda_{X3}$ and $\lambda_{Y4}$ are not same and are not same with either $\lambda_{X1}$ or $\lambda_{Y1}$.

**7.** The infrared-light reflective plate of any one of claims 1 to 6, comprising an easy-adhesion layer as at least one outermost layer thereof.

**8.** The infrared-light reflective plate of claim 7, wherein the easy-adhesion layer comprises polyvinyl butyral resin.

**9.** The infrared-light reflective plate of claim 7 or 8, wherein the easy-adhesion layer comprises at least one ultraviolet absorber.

**10.** A laminated glass comprising:

two glass plates, and, between them,
an infrared-light reflective plate of any one of claims 1 to 9.

FIG. 1

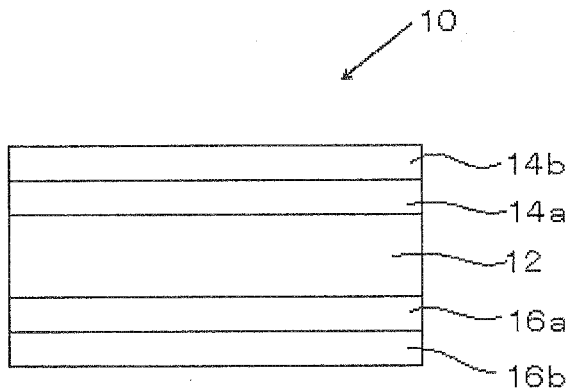


FIG. 2

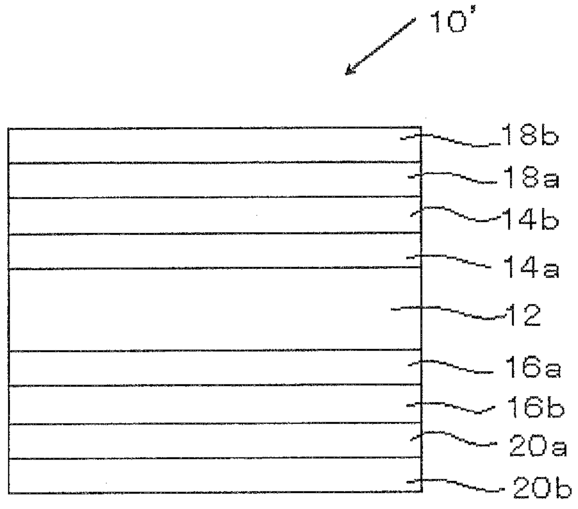

**INTERNATIONAL SEARCH REPORT**

International application No.
PCT/JP2010/059830

A. CLASSIFICATION OF SUBJECT MATTER
*G02B5/26*(2006.01)i, *B32B7/02*(2006.01)i, *E06B5/00*(2006.01)i, *G02B5/30*(2006.01)i, *B60J1/00*(2006.01)n

According to International Patent Classification (IPC) or to both national classification and IPC

B. FIELDS SEARCHED

Minimum documentation searched (classification system followed by classification symbols)
G02B5/20-5/28, G02B5/30, B60J1/00, B32B1/00-43/00, C09K19/00-19/60

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-514022 A (3M Innovative Properties Co.), 02 April 2009 (02.04.2009), paragraphs [0109] to [0111]; fig. 4 & US 2007/0109673 A1 & EP 1948434 A & WO 2007/050433 A1 & KR 10-2008-0059444 A & CA 2626143 A & CN 101291804 A | 1-10 |
| A | JP 2003-294940 A (Nitto Denko Corp.), 15 October 2003 (15.10.2003), paragraphs [0043], [0044]; fig. 3 (Family: none) | 1-10 |
| A | JP 2001-311968 A (Minolta Co., Ltd.), 09 November 2001 (09.11.2001), paragraph [0041] & US 2002/0008837 A1 | 1 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 July, 2010 (07.07.10) | 20 July, 2010 (20.07.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/059830

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-93143 A (Fujifilm Corp.), 30 April 2009 (30.04.2009), paragraph [0055] & US 2010/0039595 A & CN 101393361 A | 1 |
| A | JP 4-281403 A (Nippon Sheet Glass Co., Ltd.), 07 October 1992 (07.10.1992), paragraph [0013]; fig. 3 (Family: none) | 7-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6263486 A
- JP 20021315311 A
- JP 6194517 A
- JP 4109914 B
- JP 2009514022 T
- JP 3500127 B
- JP 4504555 T
- JP 2008545556 T
- US 4683327 A
- US 5622648 A
- US 5770107 A
- WO 9522586 A
- WO 9524455 A
- WO 9700600 A
- WO 9823580 A
- WO 9852905 A
- JP 1272551 A
- JP 6016616 A
- JP 7110469 A
- JP 11080081 A
- JP 2001328973 A
- JP 2003287623 A
- US 2367661 A
- US 2367670 A
- US 2448828 A
- US 2722512 A
- US 3046127 A
- US 2951758 A
- US 3549367 A
- US 4239850 A
- US 4212970 A
- JP 2005099248 A
- JP 2002179668 A


### Non-patent literature cited in the description


- **Y. Goto.** *Mol.Cryst. Liq. Cryst.,* 1995, vol. 260, 23-28
- *Makromol.Chem,* 1989, vol. 190, 2255
- *Advanced Materials,* 1993, vol. 5, 107
- Ekisho Debaisu Handobukku. Nikkan Kogyo Shimbun, Ltd, 1989, 199